(19) Europäisches Patentamt / European Patent Office / Office européen des brevets

(11) **EP 4 227 832 A1**

(12) **DEMANDE DE BREVET EUROPEEN**

(43) Date de publication:
**16.08.2023   Bulletin 2023/33**

(21) Numéro de dépôt: **23154307.5**

(22) Date de dépôt: **31.01.2023**

(51) Classification Internationale des Brevets (IPC):
**G06F 21/34** (2013.01)      **G06F 21/35** (2013.01)
**H04L 9/32** (2006.01)

(52) Classification Coopérative des Brevets (CPC):
**G06F 21/34; G06F 21/35; H04L 9/3234;**
**H04L 9/3271**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité:  **15.02.2022   FR 2201321**

(71) Demandeur: **IDEMIA France
92400 Courbevoie (FR)**

(72) Inventeurs:
• **DOTTAX, Emmanuelle
92400 Courbevoie (FR)**
• **BETTALE, Luk
92400 Courbevoie (FR)**

(74) Mandataire: **Idemia
2, place Samuel de Champlain
92400 Courbevoie (FR)**

(54)   **SCHEMA D'AUTHENTIFICATION POST-QUANTIQUE OPTIMISE SANS SIGNATURE, PROCEDES ET DISPOSITIFS**

(57)   Un schéma d'authentification forte post-quantique utilise un code PIN de référence stocké en mémoire d'un objet personnel 1. Un serveur génère (610) un secret ss et un chiffré correspondant ct à l'aide d'un mécanisme d'encapsulation de clé, KEM, et d'une clé publique pk de l'utilisateur, puis génère une clé cryptographique ss' avec une fonction à sens unique, OWF, appliquée au secret. Un terminal d'accès 2 reçoit ss' et ct, puis obtient (625) un PIN saisi par l'utilisateur, chiffre (630) celui-ci avec ss', et enfin transmet (635) le PIN chiffré cPIN et ct à l'objet personnel 1. Ce dernier obtient (515) ss par désencapsulation KEM de ct et avec sa clé privée sk, génère (520) ss' avec OWF, et l'utilise pour déchiffrer (525) cPIN. Une vérification de ce dernier valide un premier facteur d'authentification L'objet personnel génère puis envoie, au serveur, une confirmation Know(ss) du secret, validant un deuxième facteur d'authentification.

Figure 4

## Description

## Domaine technique

La présente invention concerne le domaine de la cryptographique informatique. Elle concerne plus particulièrement le domaine de l'authentification forte d'un utilisateur.

## Technique antérieure

Des schémas d'authentification à deux (ou plus) facteurs sont classiquement utilisés pour contrôler l'accès à des dispositifs informatiques (serveur) ou des locaux physiques.

Typiquement, ces schémas associent une authentification par session challenge-réponse avec une authentification par mot de passe (par ex. code PIN pour « *personal identification number*» ou numéro d'identification personnel, mot de passe à usage unique) ou donnée biométrique (par ex. empreinte digitale).

Un utilisateur dispose d'un objet portatif d'authentification, tel une carte à puce, une clé usb. L'objet portatif contient, en mémoire, une paire de clés privée et publique (clés asymétriques) pour l'authentification par challenge-réponse et contient le mot de passe ou la donnée biométrique de référence pour la seconde authentification.

Généralement, l'objet portatif contient en plus une deuxième clé secrète afin de sécuriser la transmission du mot de passe ou de la donnée biométrique depuis un dispositif d'accès sur lequel l'utilisateur saisit cette information, vers le dispositif portatif. Cette deuxième clé peut être une clé symétrique partagée avec le dispositif d'accès ou être une paire de clé privé-clé publique.

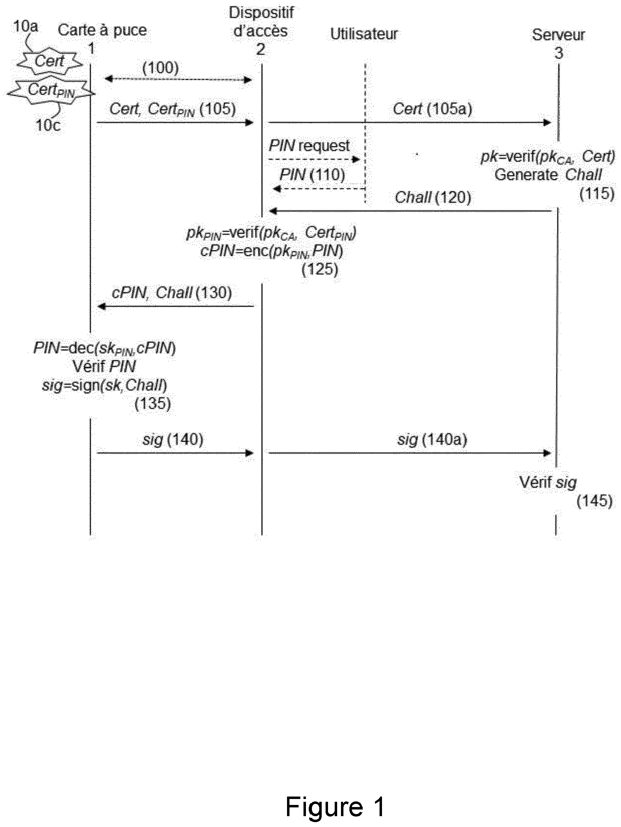

En pratique, comme illustré par la Figure 1, lorsque l'utilisateur désire obtenir l'accès à un dispositif distant 3, il présence par exemple sa carte à puce 1 au dispositif d'accès 2, par exemple un terminal doté d'un lecteur avec ou sans contact. L'utilisateur saisit son mot de passe PIN ou équivalent sur le terminal, lequel envoie le mot de passe chiffré ($cPIN$) avec la deuxième clé $pk_{PIN}$, à la carte pour vérification. Dans l'affirmative, la carte procède à son authentification auprès du dispositif distant en signant, avec la première clé privée sk, un challenge *Chall* envoyé par le dispositif distant.

Ces schémas traditionnels d'authentification sont mis à mal avec l'émergence d'ordinateurs quantiques. Si la sécurité des algorithmes cryptographiques symétriques n'est affectée que d'un facteur 2 vis-à-vis des tailles de clés par des attaques quantiques, elle est considérablement réduite pour les algorithmes à clés publiques.

Il est un souhait d'adapter ces schémas traditionnels à la cryptographie post-quantique. Des candidats d'algorithmes cryptographiques post-quantiques sont actuellement proposés au cours d'une compétition organisée par le NIST (« *National Institute of Standards and Technology* » ou Institut national des normes et de la technologie), notamment des mécanismes post-quantiques d'encapsulation de clé ou « post-quantum KEM » (pour « *Key Encapsulation Mechanism* »).

Le KEM est un mécanisme permettant de transmettre de manière sûre un secret à un interlocuteur en utilisant des algorithmes asymétriques.

Aussi, l'utilisation d'un KEM post-quantique est proposée pour sécuriser la transmission du mot de passe chiffré entre le dispositif d'accès et l'objet portatif.

Par ailleurs, des solutions post-quantiques d'authentification ont été proposées qui mettent en oeuvre un KEM post-quantique en lieu et place des signatures de challenge traditionnel.

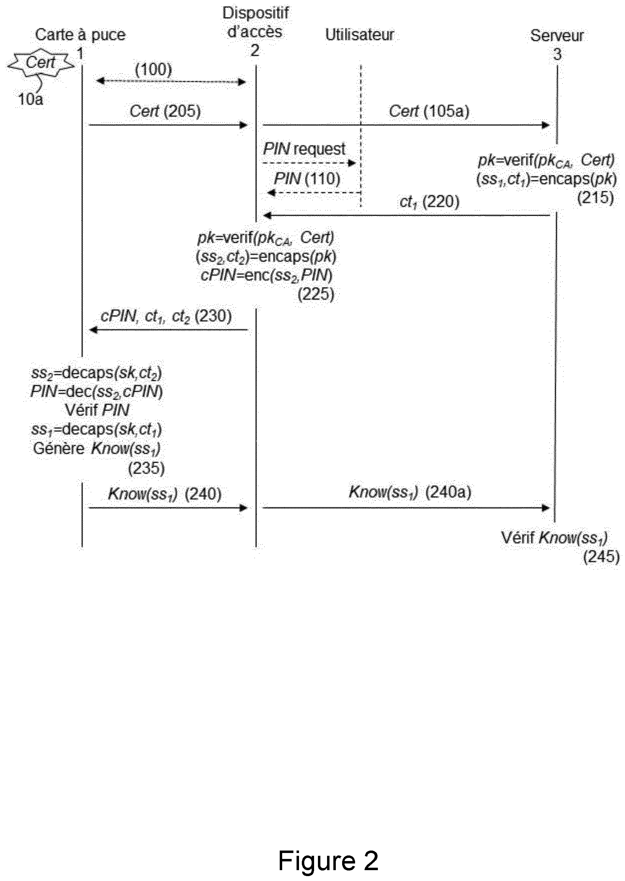

La mise en place de ces différentes techniques conduit à un schéma d'authentification à deux facteurs tel qu'illustré en Figure 2, ne requérant qu'une seule paire de clés ($pk, sk$) dans la carte à puce 1.

Le serveur génère un secret $ss_1$ et son chiffré $ct_1$, à l'aide de la fonction d'encapsulation d'un KEM et de la clé publique $pk$, et communique le chiffré $ct_1$ au dispositif d'accès. Le chiffré $ct_1$ est utilisé pour l'authentification de la carte à puce auprès du serveur.

Le dispositif d'accès génère également un deuxième secret $ss_2$ et son chiffré $ct_2$, à l'aide de la fonction d'encapsulation d'un KEM et de la même clé publique. La fonction d'encapsulation n'étant pas déterministe, ($ss_2, ct_2$) est différent de ($ss_1, ct_1$). Le deuxième secret $ss_2$ est utilisé comme clé de chiffrement du code PIN saisi par l'utilisateur, en le chiffré $cPIN$. Les chiffrés $ct_1$, $ct_2$ et $cPIN$ sont alors transmis à la carte à puce.

Cette dernière utilise la fonction de désencapsulation du KEM avec la clé privée sk pour récupérer les secrets $ss_1$ et $ss_2$. $cPIN$ est déchiffré à l'aide de $ss_2$ pour récupérer le code PIN saisi, lequel est comparé au code PIN de référence en mémoire de la carte à puce.

En cas de code PIN valide, une confirmation $Know(ss_1)$ du secret $ss_1$ est envoyée au serveur pour prouver la possession, par la carte à puce, du secret $ss_1$. Cette confirmation est vérifiée par le serveur. L'authentification de l'utilisateur est effective en cas de vérification positive, tout comme la vérification positive de la signature du challenge dans les schémas traditionnels.

Ce schéma d'authentification à deux facteurs basé sur le KEM n'est pas entièrement satisfaisant dans la mesure où il sollicite trop la carte à puce. Il est donc un besoin de l'améliorer tout en conservant ses propriétés.

## Exposé de l'invention

L'invention vise à réduire les traitements sur la carte à puce en invoquant une seule fois la fonction de désencapsulation du KEM plutôt que deux fois. Aussi, la fonction d'encapsulation sera appelée une seule fois, nécessitant de lier les deux mécanismes d'authentification de façon appropriée pour conserver les propriétés du protocole.

L'invention concerne donc un procédé d'authentification d'un utilisateur auprès d'un dispositif distant, comprenant, au niveau d'un objet portatif stockant une donnée personnelle d'authentification de référence, les étapes suivantes :

- recevoir, d'un dispositif d'accès, une donnée personnelle d'authentification chiffrée et un chiffré généré par le dispositif distant. Il s'agit par exemple du chiffré $cPIN$ du code PIN saisi par l'utilisateur accompagné du chiffré $ct_1$,
- déchiffrer, à l'aide d'une clé cryptographique, la donnée personnelle d'authentification chiffrée,
- en cas de donnée personnelle d'authentification valide, envoyer, au dispositif distant, une confirmation d'un secret ($ss1$ dans l'exemple plus haut) obtenu à l'aide d'un mécanisme d'encapsulation de clé, KEM, appliqué audit chiffré.

L'invention concerne également, côté dispositif d'accès (par ex. terminal) et dispositif distant (par ex. serveur), un procédé d'authentification d'un utilisateur auprès d'un dispositif distant, à l'aide d'un objet portatif stockant une donnée personnelle d'authentification de référence, comprenant les étapes suivantes :

- générer, par le dispositif distant, un secret et un chiffré correspondant à l'aide d'un mécanisme d'encapsulation de clé, KEM, et d'une clé publique de l'utilisateur,
- obtenir, par un dispositif d'accès connecté à l'objet portatif, une donnée personnelle d'authentification saisie par l'utilisateur,
- chiffrer, par le dispositif d'accès et à l'aide d'une clé cryptographique, la donnée personnelle d'authentification saisie,
- transmettre, à l'objet portatif, la donnée d'authentification chiffrée et le chiffré correspondant au secret,
- recevoir en retour, de l'objet portatif, une confirmation du secret.

Les procédés selon l'invention sont caractérisés en ce que la clé cryptographique (pour chiffrer le code PIN ou déchiffrer $cPIN$) est générée par application d'une fonction à sens unique à un secret dérivé du secret obtenu à l'aide du KEM.

Le chiffrement de la donnée d'authentification s'appuie ainsi sur le secret utilisé pour l'authentification avec le dispositif distant (serveur), et non sur un secret distinct comme c'est le cas dans les techniques connues. Cela permet de réduire les données à transmettre à l'objet portatif, mais également d'éviter une exécution coûteuse de la fonction de désencaspulation KEM.

Ce schéma d'authentification conserve un contrôle, par le dispositif distant, de l'authentification basée sur la cryptographie asymétrique. En outre, la donnée d'authentification (par exemple un code PIN ou mot de passe) reste protégée lors de son échange entre le dispositif d'accès et l'objet portatif.

Corrélativement, l'invention concerne aussi un dispositif personnel d'authentification d'un utilisateur auprès d'un dispositif distant, comportant une mémoire stockant une donnée personnelle d'authentification de référence et un processeur configuré pour :

- recevoir, d'un dispositif d'accès, une donnée personnelle d'authentification chiffrée et un chiffré généré par le dispositif distant,
- déchiffrer, à l'aide d'une clé cryptographique, la donnée personnelle d'authentification chiffrée,
- en cas de donnée personnelle d'authentification valide, envoyer, au dispositif distant, une confirmation d'un secret obtenu à l'aide d'un mécanisme d'encapsulation de clé, KEM, appliqué audit chiffré,

caractérisé en ce qu'il est en outre configuré pour générer la clé cryptographique par application d'une fonction à sens unique à un secret dérivé du secret obtenu à l'aide du KEM.

De même, l'invention concerne également un système d'authentification (par ex. terminal d'accès et serveur distant) d'un utilisateur à l'aide d'un objet portatif stockant une donnée personnelle d'authentification de référence, comprenant un dispositif d'accès et un dispositif distant,

le dispositif distant comportant un processeur configuré pour :

- générer un secret et un chiffré correspondant à l'aide d'un mécanisme d'encapsulation de clé, KEM, et d'une clé publique de l'utilisateur,
- authentifier l'objet portatif par vérification d'une confirmation du secret émise par l'objet portatif, et

le dispositif d'accès étant connecté à l'objet portatif et comportant un processeur configuré pour :

- obtenir une donnée personnelle d'authentification saisie par l'utilisateur,
- chiffrer, à l'aide d'une clé cryptographique, la donnée personnelle d'authentification saisie,
- transmettre, à l'objet portatif, la donnée d'authentification chiffrée et le chiffré correspondant au secret,
- recevoir en retour, de l'objet portatif, la confirmation du secret,

le système d'authentification étant caractérisé en ce qu'il est configuré pour générer la clé cryptographique par application d'une fonction à sens unique à un secret dérivé du secret obtenu à l'aide du KEM.

Des caractéristiques facultatives des modes de réalisation de l'invention sont définies dans les revendications annexées. Certaines de ces caractéristiques sont expliquées ci-dessous en référence à un procédé, tandis qu'elles peuvent être transposées en caractéristiques de dispositif.

Dans un mode de réalisation, le procédé, au niveau d'un objet portatif, comprend en outre l'étape suivante : obtenir le secret par désencapsulation KEM du chiffré à l'aide d'une clé privée d'un schéma clé privée-clé publique stockée en mémoire de l'objet portatif.

Dans un autre mode de réalisation, le procédé, au niveau d'un objet portatif, comprend en outre l'étape suivante : vérifier la donnée personnelle d'authentification déchiffrée avec la donnée personnelle d'authentification de référence.

Dans un autre mode de réalisation, le procédé, au niveau d'un objet portatif, comprend en outre l'étape suivante : générer la confirmation de secret par l'application d'une fonction de hachage au secret obtenu ou à toute autre clé dérivée du secret obtenu, ou par le chiffrement d'une donnée prédéterminée à l'aide du secret obtenu ou de toute autre clé dérivée du secret obtenu.

Dans un autre mode de réalisation, la clé cryptographique est générée par le dispositif distant et transmise par lui au dispositif d'accès. Cela permet à ce dernier de chiffrer la donnée personnelle d'authentification, sans divulguer le secret et sans nécessiter d'exécution coûteuse de la fonction de désencaspulation KEM au niveau du dispositif d'accès.

Dans un autre mode de réalisation, le procédé, au niveau du système d'accès, comprend en outre la vérification, par le dispositif distant, de la confirmation de secret reçue en retour, avec le secret généré, de sorte à authentifier positivement l'objet portatif en cas de vérification positive.

Dans un mode de réalisation de l'invention, le secret dérivé vaut le secret obtenu à l'aide du KEM.

Dans un mode de réalisation hybride, le secret dérivé combine le secret obtenu à l'aide du KEM avec au moins un second secret partagé entre l'objet portatif et le dispositif distant et obtenu à l'aide d'un algorithme de cryptographie pré-quantique. L'authentification ainsi proposée garantit un niveau de sécurité minimal égal au plus fort des niveaux de sécurité offert entre la cryptographie pré-quantique et la cryptographie post-quantique (via le KEM).

En particulier, le second secret partagé peut être obtenu en utilisant un échange de clés Diffie-Hellman basé sur les courbes elliptiques, aussi connu sous la désignation EDCH.

Par ailleurs, la confirmation de secret peut être basée sur le secret obtenu à l'aide du KEM et sur le second secret partagé, typiquement être basée sur le secret dérivé mentionné précédemment.

Au moins une partie des procédés selon l'invention peut être mise en oeuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "circuit", "module" ou "système". De plus, la présente invention peut prendre la forme d'un produit de programme informatique incorporé dans tout support d'expression tangible disposant d'un code de programme utilisable par ordinateur incorporé dans le support.

Étant donné que la présente invention peut être mise en oeuvre dans un logiciel, la présente invention peut être incorporée sous forme de code lisible par ordinateur pour être fournie à un appareil programmable sur tout support adapté. Un support tangible ou non transitoire peut comprendre un support de stockage tel qu'un lecteur de disque dur, un dispositif de bande magnétique ou un dispositif de mémoire à semi-conducteurs et analogues. Un support transitoire peut comporter un signal tel qu'un signal électrique, un signal électronique, un signal optique, un signal acoustique, un signal magnétique ou un signal électromagnétique, par exemple un signal hyperfréquence ou RF (radiofréquence).

**Brève description des dessins**

D'autres particularités et avantages de l'invention apparaîtront encore dans la description ci-après, illustrée par les figures ci-jointes qui en illustrent des exemples de réalisation dépourvus de tout caractère limitatif.

La Figure 1 illustre un schéma historique d'authentification forte.
La Figure 2 illustre un schéma d'authentification forte mettant en oeuvre des opérations post-quantiques, inspiré des techniques connues.
La Figure 3 représente, schématiquement, un exemple d'architecture de système d'authentification pour une mise en oeuvre de l'invention.
La Figure 4 illustre un schéma d'authentification forte selon une mise en oeuvre de l'invention.
La Figure 5 représente, à l'aide d'un ordinogramme, des étapes générales d'un procédé d'authentification au niveau d'un dispositif personnel d'authentification, selon une mise en oeuvre de l'invention.
La Figure 6 représente, à l'aide d'un ordinogramme, des étapes générales d'un procédé d'authentification au niveau d'un système d'accès correspondant, selon une mise en oeuvre de l'invention.
La Figure 7 illustre un schéma d'authentification forte selon une mise en oeuvre alternative de l'invention.

Description détaillée

La présente invention concerne un procédé d'authentification forte d'un utilisateur porteur d'une paire de clés asymétriques et d'une donnée personnelle d'authentification. Ces informations peuvent être mémorisée au sein d'un objet portatif personnel.

Le présent procédé est dit d'authentification forte car il combine « quelque chose que l'utilisateur possède », i.e. une clé privée présente dans l'objet portatif, et « quelque chose que l'utilisateur est/sait », à savoir une donnée personnelle d'authentification, par exemple un code PIN, mot/phrase de passe, trait biométrique.

Si la description qui suit s'appuie sur deux facteurs d'authentification (l'un basé sur la cryptographie asymétrique, l'autre sur la donnée d'authentification), l'invention peut s'appliquer à un plus grand nombre de facteurs d'authentification combinés, par exemple en prévoyant deux ou plus données d'authentification (code PIN et trait biométrique).

Par ailleurs, la description ci-après s'appuie sur l'utilisation de certificats numériques pour diffuser la connaissance de la clé publique (associée à la clé privée ci-dessus) au dispositif distant notamment. En effet, le certificat contient la clé publique de l'utilisateur et est certifié, par signature, par un organisme tiers. Bien entendu, d'autres mécanismes de propagation de la clé publique vers le dispositif distant peuvent être envisagés (configuration manuelle, etc.).

L'invention s'utilise avantageusement avec des algorithmes post-quantiques. Néanmoins, elle peut également s'utiliser avec des algorithmes de cryptographie classique, non post-quantiques.

L'authentification forte trouve de nombreuses applications sécuritaires, typiquement pour l'accès à un serveur distant ou pour le contrôle d'accès à des locaux protégés.

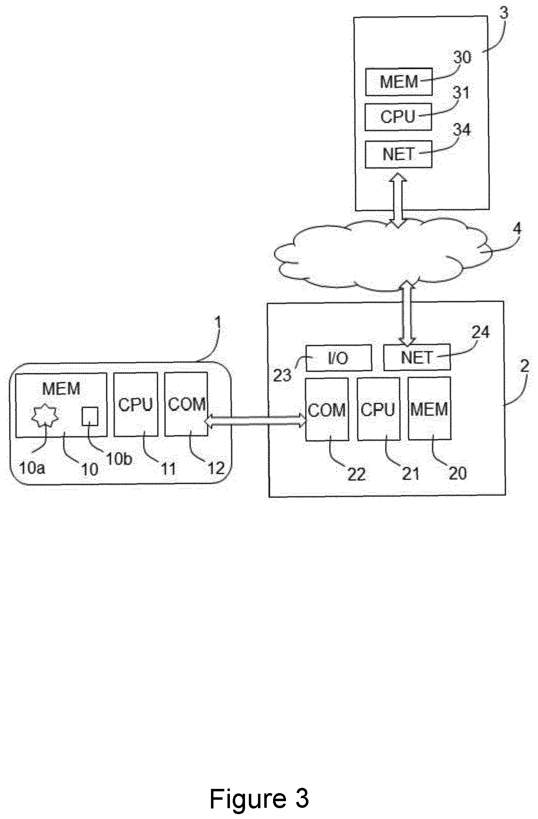

En référence à la Figure 3, on a représenté schématiquement une architecture de système d'authentification pour la mise en oeuvre de schémas d'authentification forte, à deux (ou plus) facteurs. Ce système comprend au moins un objet portatif personnel 1, un dispositif d'accès ou équipement client 2, et un dispositif distant, typiquement un serveur 3 auquel le dispositif d'accès 2 peut se connecter via un réseau 4 tel qu'Internet.

L'objet portatif personnel 1 est un dispositif électronique personnel à un individu (de nombreux individus peuvent posséder chacun un tel objet), et constitue préférentiellement un élément d'identification officiel, avantageusement émis par une autorité mettant typiquement en oeuvre le serveur 3 et le service (d'accès) associé. Cet objet portatif 1 peut prendre différentes formes selon les usages envisagés et comporte, en mémoire 10, une paire de clés asymétriques (*sk, pk*) associée à l'individu ainsi qu'une donnée d'authentification personnelle de référence 10b. Sur la figure, la paire de clés asymétriques est représentée par un certificat numérique Cert 10a.

De façon connue en soi, le certificat électronique 10a est un ensemble de données contenant au moins la clé publique *pk,* des informations d'identification de l'individu et au moins une signature de ces données construite à partir de la clé privée d'un organisme de certification.

Selon un mode de réalisation, l'objet portatif 1 prend la forme d'une carte à puce (de type « smart card ») aux dimensions standard et généralement en PVC ou polycarbonate, ou tout objet connecté contenant une puce. Selon d'autres modes de réalisation, l'objet portatif 1 prend la forme d'une clé USB, d'un dongle, d'un token matériel. Quelle que soit la forme, l'objet portatif 1 comporte une mémoire MEM 10 stockant notamment du code et des logiciels pour la mise en oeuvre d'un procédé d'authentification forte, un processeur sécurisé CPU 11 pour l'exécution du code et une interface de communication COM 12 de type avec contact (par ex. ISO 7816, USB) ou sans contact (par ex. ISO 14443). Ces éléments peuvent être groupés dans une puce au sein de l'objet portatif 1.

L'interface de communication COM 12 permet une mise en communication avec une interface correspondance COM 22 lorsque l'objet portatif 1 est présenté au dispositif d'accès 2.

L'interface COM 22 peut inclure un lecteur de carte, avec ou sans contact, lorsque l'objet portatif 1 est de type carte à puce. En variante, il peut s'agir d'une simple interface USB pour un objet portatif 1 de type USB.

Le dispositif d'accès 2 est un terminal local, par exemple un terminal utilisateur, un téléphone mobile ou smartphone, une tablette, un assistant personnel, un ordinateur de bureau ou portable, une borne interactive, accessible à l'utilisateur pour solliciter un accès à un service, dispositif ou local par la mise en oeuvre d'une authentification forte.

Le dispositif d'accès 2 comprend, outre l'interface de communication COM 22 avec tout objet portatif présenté 1, une mémoire MEM 20 stockant du code et des logiciels pour la mise en oeuvre d'un procédé d'authentification forte, un processeur CPU 21 pour l'exécution du code, une interface utilisateur 23 permettant à l'utilisateur de saisir ou acquérir une ou plusieurs données d'authentification personnelles et une interface de communication NET 24 avec le dispositif distant 3 via le réseau 4.

L'interface utilisateur 23 peut être de différents types selon la nature de la donnée d'authentification ou des données d'authentification à saisir/acquérir et les besoins d'interaction avec le système pour procéder à une authentification en vue de l'accès sollicité. Typiquement, l'interface utilisateur 23 peut comprendre un ou plusieurs équipements parmi :

- un clavier ou un écran tactile pour la saisie d'un code personnel,
- un écran d'affichage,
- un moyen d'acquisition biométrique. Le trait biométrique peut par exemple être la forme du visage, une empreinte digitale, une empreinte palmaire, un iris de l'individu, etc. Aussi, le moyen d'acquisition peut prendre différentes formes : scanner, appareil photo, caméra, lecteur d'empreinte, etc.

Dans tous les cas, une donnée d'authentification de référence utilisée pour authentification 10b de l'utilisateur est avantageusement une donnée pré-enregistrée en mémoire 10 de l'objet portatif 1. La donnée de référence est celle qui fait foi et à laquelle une donnée d'authentification saisie par l'utilisateur ou acquise de celui-ci est comparée pour valider ou non un facteur d'authentification.

Dans la suite de la description il sera fait référence de façon préférée à une donnée d'authentification de type code PIN, à des fins de concision. Néanmoins, l'homme du métier est en mesure d'utiliser tout autre type de donnée d'authentification, mot ou phrase de passe, mot à usage unique, donné biométrique, etc.

Le dispositif distant 3 est un équipement distant, sécurisé, typiquement un serveur fournisseur d'un service sécurisé, par exemple un serveur d'une banque, d'un hôtel, etc. Il comprend de façon classique une mémoire MEM 30 stockant du code et des logiciels pour la mise en oeuvre du service incluant un procédé d'authentification forte, un processeur CPU 31 pour l'exécution du code, une interface réseau NET 34 pour communiquer avec tout dispositif d'accès 2 via le réseau 4.

La communication entre le dispositif d'accès 2 et le serveur 3 est de préférence sécurisée via un canal sécurisé par chiffrement et/ou un mécanisme d'intégrité.

La Figure 1 illustre un schéma traditionnel d'authentification forte à deux facteurs. L'objet portatif 1 peut par exemple être un objet connecté contenant une puce communiquant sans contact ou un clé USB d'authentification FIDO2.

Dans tous les cas, l'objet portatif 1 est présenté (100) au dispositif d'accès 2.

L'objet connecté est présenté à un lecteur de carte à puce dotant le dispositif d'accès 2. La clé USB FIDO2 est insérée dans un port USB.

L'objet portatif 1 comporte le certificat Cert 10a correspondant à la paire de clés ($pk, sk$) destinée à l'authentification avec le serveur 3, mais également un second certificat numérique $Cert_{PIN}$ 10c correspondant à une autre paire de clés ($pk_{PIN}, sk_{PIN}$) destinée à sécuriser la transmission du code PIN utilisateur à l'objet 1. En variante du second certificat numérique $Cert_{PIN}$ 10c, l'objet portatif 1 peut comprendre un secret/clé 10c partagé avec le dispositif d'accès 2 lorsque la sécurisation du code PIN est réalisée au travers d'un algorithme de cryptographie symétrique. Les explications ci-dessous sont basées sur l'utilisation du certificat numérique, néanmoins elles s'appliquent à l'utilisation d'un algorithme de cryptographique symétrique, moyennant des adaptations classiques pour l'homme du métier.

En réponse à la mise en communication de l'objet portatif 1 avec le dispositif d'accès 2, le premier transmet (105) de façon classique les certificats numériques Cert 10a et $Cert_{PIN}$ 10c pour propager les clés publiques $pk$ et $pk_{PIN}$. Le certificat Cert est retransmis (105a) au serveur 3 pour que ce dernier ait connaissance de la clé publique $pk$.

En sollicitant l'accès à un service, serveur ou local, l'utilisateur saisit (110) son code PIN personnel.

En parallèle et en réponse au certificat Cert 10a reçu, le serveur 3 vérifie (115) le certificat reçu et, en cas de certificat valide, génère et transmet (120) un challenge *Chall* d'authentification au dispositif d'accès 2.

De même, le dispositif d'accès 2 vérifie le certificat $Cert_{PIN}$ 10c reçu. En cas de certificat valideou de secret/clé partagé pour un chiffrement symétrique, le dispositif d'accès 2 chiffre le code PIN saisi à l'aide de la clé publique $pk_{PIN}$ associée au certificat vérifié ou à l'aide du secret/clé partagé. Le code PIN chiffré est noté *cPIN* : $cPIN = enc(pk_{PIN}, PIN)$. Il s'agit de l'étape 125. Tout algorithme classique de chiffrement symétrique ou asymétrique peut être utilisé.

Par exemple, le code PIN peut être chiffré par canal sécurisé entre le dispositif d'accès 2 et l'objet portatif 1. Le canal peut être ouvert sur la base d'une information liée au numéro d'accès de carte (CAN pour « *Card Access Number* ») ou à la zone de lecture automatique (MRZ pour « *Machine-Readable Zone* »), auquel cas il peut être BAC (« Basic Access Control ») ou PACE (« *Password Authenticated Connection Establishment* ») comme défini par l'ICAO (« *International Civil Aviation Organization* »).

En variante, le code PIN peut être chiffré à l'aide d'un secret/clé partagé obtenu par l'algorithme ECDH (« *Elliptic-curve Diffie-Hellman* »).

Le chiffré *cPIN* et le challenge *Chall* sont transmis (130), via le lecteur de carte ou la connexion USB, à l'objet portatif 1 via le lecteur de carte ou la connexion USB.

A réception, d'une part, l'objet portatif 1 déchiffre *cPIN* à l'aide soit de la clé privée $sk_{PIN}$ soit du secret/clé partagé, pour obtenir le code PIN saisi : $PIN = dec(sk_{PIN}, cPIN)$. Ce dernier est alors comparé au code PIN de référence 10b en mémoire MEM 10 de l'objet portatif 1. En cas de codes PIN identiques, le premier facteur d'authentification est validé. D'autre part, l'objet portatif 1 signe le challenge d'authentification *Chall* avec sa clé privée sk correspondant à la clé publique $pk$ que le serveur 2 possède : $sig = sign(s_k, Chall)$. Il s'agit de l'étape 135.

La signature sig, comme réponse au challenge, est transmise au serveur 3 (140a) via le dispositif d'accès 2 (140). La vérification (145) de la signature par le serveur 3 à l'aide de la clé publique $pk$ ($verif(pk,sig)$) permet de valider le deuxième facteur d'authentification auprès du serveur.

L'émergence de la cryptographique quantique rend les mécanismes de chiffrement asymétrique non sûrs. Il est donc un souhait d'adapter le schéma traditionnel ci-dessus à la cryptographie post-quantique. Certains algorithmes cryptographiques post-quantiques candidats ont été proposés au cours d'une compétition organisée par le NIST (« *National Institute of Standards and Technology* » ou Institut national des normes et de la technologie), notamment des mécanismes post-quantique d'encapsulation de clé ou post-quantum KEM (pour « *Key Encapsulation Mechanism* »).

Un mécanisme d'encapsulation de clé permet de transmettre de manière sûre un secret à un interlocuteur en utilisant des algorithmes cryptographiques asymétriques. De façon connue, il comprend généralement trois algorithmes ou « méthodes » ou « fonctions » :

- de génération de clés (asymétriques),
- d'encapsulation, et
- de décapsulation ou désencapsulation.

Typiquement, un mécanisme KEM entre deux parties propose que la première partie utilise la clé publique de l'autre partie et la méthode d'encapsulation du mécanisme KEM pour générer un secret aléatoire ss et un chiffré *et* de ce secret. Le chiffré est transmis à l'autre partie qui peut, par désencapsulation à l'aide de sa clé privée, récupérer le secret ss, ainsi partagé.

La sécurisation du schéma traditionnel peut passer par la mise en place d'un KEM pour transmettre le code PIN saisi à l'objet portatif 1.

En outre, des solutions post-quantiques d'authentification par cryptographie asymétrique, basées sur un KEM et non plus sur la signature d'un challenge, ont été proposées et peuvent se substituer au challenge-réponse du schéma traditionnel ci-dessus. Les signatures post-quantiques requièrent en effet des tailles phénoménales de clés et/ou des tailles phénoménales de variables intermédiaires, et donc sont fortement consommatrices de mémoire vive.

La Figure 2 illustre le schéma d'authentification forte à deux facteurs résultant de l'adaptation de celui de la Figure 1 à ces techniques post-quantiques. Les mêmes références désignent les mêmes éléments ou étapes.

Avec l'adoption du mécanisme KEM, les deux secrets utilisés pour les deux facteurs d'authentification sont générés par la fonction d'encapsulation KEM à partir de la clé publique *pk* de l'objet portatif 1. Ce dernier n'a plus besoin de stocker qu'une seule paire de clés asymétriques, et ne transmet (205) que le certificat Cert au dispositif d'accès 2.

Comparativement au schéma traditionnel, le serveur ne génère plus (215) de challenge *Chall* mais un secret $ss_1$ et son chiffré $ct_1$ par la fonction d'encapsulation KEM : $(ss_1, ct_1)$=encaps(pk). C'est ce chiffré $ct_1$ qui sera communiqué à l'objet portatif 1 pour qu'il prouve, par l'obtention du secret $ss_1$, qu'il est bien le détenteur de la clé privée sk, et ainsi valider l'authentification.

Le chiffré $ct_1$ est donc transmis (220) d'abord au dispositif d'accès 2.

Ce dernier, qui doit chiffrer le code PIN saisi par l'utilisateur, génère à son tour un autre secret $ss_2$ (qui sera utilisée comme clé de chiffrement du code PIN) et son chiffré $ct_2$, à nouveau à l'aide de la fonction d'encapsulation KEM et de la clé publique *pk* : $(ss_2, ct_2)$=encaps(pk). Le code PIN est alors chiffré avec le secret

$ss_2$ : cPIN = enc($ss_2$, PIN). C'est l'étape modifiée 225.

Le code PIN chiffré *cPIN* ainsi que les chiffrés $ct_1$ (pour effectuer l'authentification avec le serveur) et $ct_2$ (pour déchiffrer *cPIN*) sont transmis (230) à l'objet portatif 1.

Ce dernier récupère la clé de chiffrement à l'aide de la fonction de désencapsulation du mécanisme KEM appliquée à $ct_2$ et de sa clé privée sk : $ss_2$=decaps($sk$, $ct_2$), puis déchiffre *cPIN* à l'aide de cette clé pour obtenir le code PIN saisi : PIN = dec($ss_2$, cPIN). Une comparaison classique entre le code PIN ainsi récupéré et le code PIN de référence 10b est réalisée pour valider ou non le premier facteur d'authentification est validé.

D'autre part, si la première authentification est validée, les opérations se poursuivent pour réaliser l'authentification avec le serveur 3, avec l'objet portatif 1 qui récupère le secret $ss_1$ partagé avec le serveur 3 à l'aide de la fonction de désencapsulation KEM appliquée à $ct_1$ et de sa clé privée sk : $ss_1$=decaps($sk$, $ct_1$) et génère une confirmation de secret *Know(ss_1)*.

La confirmation de secret est une information basée sur le secret $ss_1$ qui prouve que l'objet portatif 1 a bien connaissance de celui-ci, permettant au serveur de valider l'authentification basée sur la paire de clés asymétriques (représentée par le certificat numérique). Différentes fonctions peuvent être utilisées pour mettre en oeuvre la fonction *Know* générant la confirmation de secret.

Par exemple, la fonction identité peut être utilisée : $Know(ss_1) = ss_1$. Le secret ne servant que pour l'authentification, sa divulgation ici, en fin de processus, n'est pas préjudiciable.

Dans d'autres exemples, une fonction de hachage appliqué au secret, typiquement un SHA (pour « *Secure Hash Algorithm* ») de la famille SHA-2 ou de la famille SHA-3 spécifiée par le NIST, peut être utilisée : $Know(ss_1) = SHA(ss_1)$.

En variante encore, une opération de chiffrement, par exemple AES (pour *« Advanced Encryption Standard »*), d'une donnée prédéterminée avec la clé $ss_1$ peut être utilisée : $Know(ss_1) = AES_{ss1}(data)$.

Ces opérations par l'objet portatif 1 sont réalisées à l'étape 235.

La confirmation de secret est transmise au serveur 3 (240a) via le dispositif d'accès 2 (240). La vérification (245) de la confirmation par le serveur 3 (en appliquant la même fonction *Know* au secret $ss_1$) permet de valider le deuxième facteur d'authentification auprès du serveur 3.

Il est cependant souhaitable d'améliorer ce schéma post-quantique d'authentification forte à deux facteurs pour réduire les calculs au niveau de l'objet portatif 1 (typiquement deux désencapsulations), lequel dispose généralement de ressources limitées. Toutefois, les propriétés du protocole doivent être conservées : authentification de l'objet portatif par le serveur, ne pas exposer le code PIN à des attaques.

Selon l'invention, la clé cryptographique de chiffrement ($ss_2$ ci-dessus) est générée par application d'une fonction à sens unique à un secret dérivé du secret $ss_1$ obtenu à l'aide du KEM et utilisé pour générer la confirmation de secret. En d'autres termes, le chiffrement du code PIN (ou de toute donnée d'authentification) s'appuie sur le secret utilisé pour l'authentification avec le serveur 3, et non sur un secret distinct comme c'est le cas dans les techniques connues. Cela permet de réduire les données à transmettre à l'objet portatif 1 lors de l'étape 230, mais également d'éviter une exécution coûteuse de la fonction de désencaspulation *decaps*.

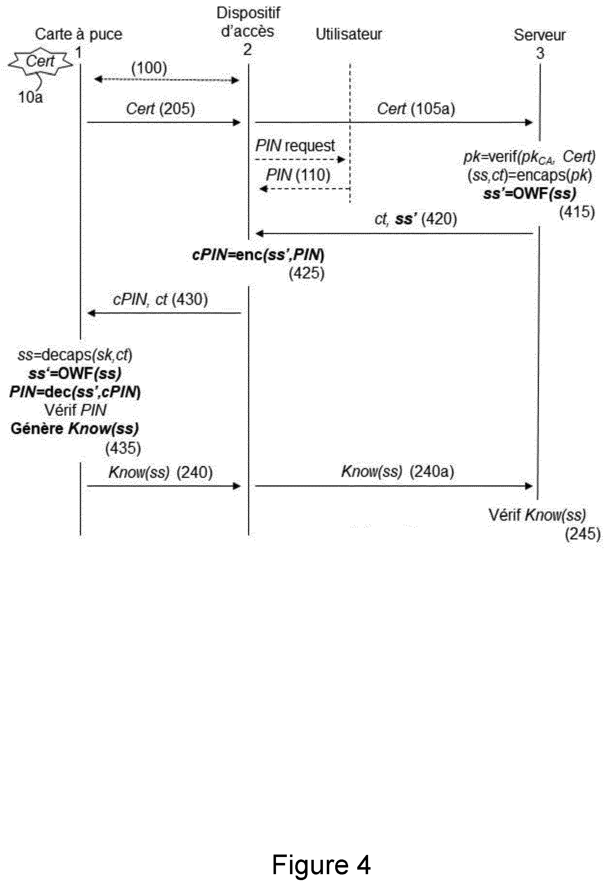

La Figure 4 illustre un schéma d'authentification forte à deux facteurs selon un mode de réalisation de l'invention. Dans ce mode de réalisation, le secret dérivé vaut le secret obtenu à l'aide du KEM.

A l'étape 415, en plus de récupérer la clé publique *pk* et de générer le secret d'authentification ss et son chiffré *et* ((ss, ct)=encaps(pk)), le serveur 3 génère la clé de chiffrement, notée ss', qui sera utilisée pour la protection du code PIN saisi, directement à partir du secret ss et à l'aide d'une fonction à sens unique OWF (« *One Way Function* ») : ss'=OWF(ss).

Une fonction à sens unique est difficile à inverser, de telle sorte que le paramètre ss est gardé secret quand bien même le résultat *ss'* est divulgué. A titre d'exemple, la fonction à sens unique peut être une fonction de hachage, par exemple un SHA de la famille SHA-2 ou de la famille SHA-3 spécifiée par le NIST.

La clé de chiffrement *ss'* est alors transmise au dispositif d'accès 2, avec le chiffré *et* pour l'authentification serveur (étape 420).

Le dispositif d'accès n'a plus qu'à chiffrer (425) le code PIN avec cette clé (*cPIN* = enc(ss', PIN)), simplifiant également ses opérations. Les chiffrés *cPIN* et *et* sont transmis à l'objet portatif 1, réduisant le volume de données échangées lors de cette étape 430.

L'objet portatif 1 peut alors récupérer (435) le secret ss et la clé de chiffrement ss' en utilisant successivement la fonction de désencapsulation du mécanisme KEM avec sa clé privée sk, puis la même fonction à sens unique :

$$ss = \text{decaps}(sk, ct),$$

$$ss' = \text{OWF}(ss)$$

L'objet portatif 1 dispose alors des deux secrets nécessaires aux deux facteurs d'authentification.

Toujours à l'étape 435, il déchiffre *cPIN* à l'aide de cette clé *ss'* pour obtenir le code PIN saisi : PIN = dec(ss', cPIN). Une comparaison classique entre le code PIN ainsi récupéré et le code PIN de référence 10b est réalisée pour valider ou non le premier facteur d'authentification. Si cette première authentification est validée, les opérations se poursuivent avec la génération de la confirmation de secret *Know(ss)*.

La fonction *Know* peut simplement être un code MAC d'authentification de message (« *Message Authentification Code* ») appliqué à une donnée préétablie à l'aide du secret ss ou de toute autre clé *ss"* dérivée de ss (serveur et objet portatif connaissant la méthode de dérivation à appliquer de façon symétrique). Une telle autre clé dérivée pourrait avantageusement être utilisée pour un canal sécurisé (secure channel) entre l'objet portatif 1 et le serveur 3, une fois l'authentification confirmée.

Elle peut aussi être une fonction de hachage appliquée au secret ss ou à toute autre clé *ss"* dérivée de ss. Typiquement, un SHA de la famille SHA-2 ou de la famille SHA-3 spécifiée par le NIST.

Elle peut également être une opération de chiffrement, par exemple AES, d'une donnée prédéterminée avec le secret ss ou toute autre clé *ss"* dérivée de ss.

La fonction *Know(ss)* est différente de l'identité ou ne peut renvoyer la clé de chiffrement ss', afin de ne pas compromettre la sécurité du code PIN.

La confirmation de secret Know(ss) est envoyée au serveur 3 (240, 240a) et vérifiée par celui-ci (245).

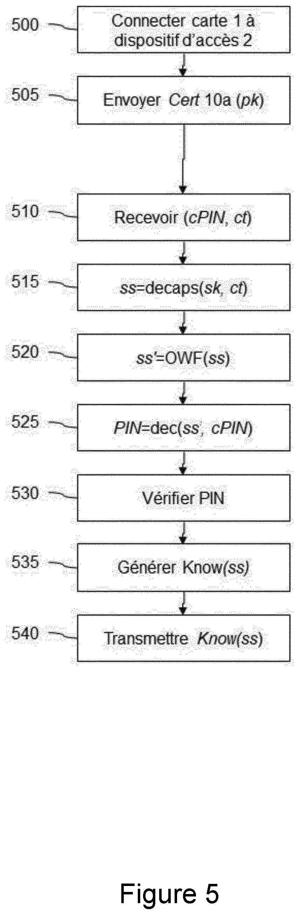

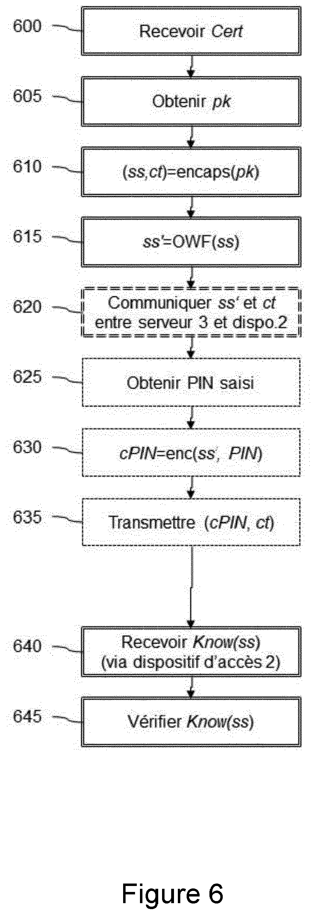

Les Figures 5 et 6 illustres, à l'aide d'ordinogrammes, des étapes générales d'un mode de réalisation de l'invention respectivement du côté de l'objet portatif 1 (Figure 5) et du côté du système d'accès (Figure 6).

Le système d'accès de la Figure 6 est composé par exemple du dispositif d'accès 2 dont les étapes sont représentées en pointillés, et du serveur distant 3 dont les étapes sont représentées en trait double. Le dispositif d'accès 2 est connecté au serveur distant 3 via le réseau 4. Ces figures reprennent le scénario de la Figure 4.

A l'étape 500, l'utilisateur présente l'objet portatif 1, par exemple une carte à puce, au dispositif d'accès 2. Cette étape alimente la carte à puce 1 qui en retour envoie son certificat Cert au dispositif d'accès 2, à l'étape 505.

De son côté, le dispositif d'accès 2 retransmet le certificat Cert au dispositif distant 3, type serveur, à l'étape 600.

A l'étape 605, le serveur 3 extrait la clé publique *pk* du certificat *Cert*. Il s'agit simplement de vérifier la signature du certificat avec un clé publique $pk_{CA}$ de l'autorité de certification : verif($pk_{CA}$, Cert) qui renvoie la clé *pk* extraite du certificat. Des mécanismes classiques peuvent être utilisés.

Bien entendu, ces étapes peuvent être omises si le serveur 3 est déjà en possession de la clé publique *pk*.

A l'étape 610, le serveur 3 génère un secret ss et un chiffré *et* correspondant, à l'aide d'un mécanisme d'encapsulation de clé, KEM (encaps), et de la clé publique *pk* de l'utilisateur ainsi récupérée : (*ss*, *ct*)=encaps(pk).

A l'étape 615, le serveur 3 génère la clé de chiffrement *ss'* par dérivation du secret ss à l'aide d'une fonction à sens unique prédéfinie (et connue de la carte à puce 1) : ss'=OWF(ss).

Les étapes 605-615 correspondent à l'étape 415 de la Figure 4.

Le chiffré *et* et la clé de chiffrement *ss'* sont transmis au dispositif d'accès 2 à l'étape 620.

Le dispositif d'accès reçoit une donnée d'authentification de l'utilisateur, typiquement un code PIN ou mot de passe saisi par l'utilisateur via l'interface utilisateur 23 ou une donnée biométrique acquise, à l'étape 625. Cette étape peut cependant être réalisée plus tôt entre les étapes 600 et 620.

Le dispositif d'accès 2 chiffre le code PIN à l'étape 630 à l'aide de la clé *ss'* : cPIN = enc(ss', PIN) (étape 425 en Figure 4). Les chiffré *et* et cPIN sont alors transmis à la carte à puce 1 à l'étape 635.

De son côté, la carte à puce 1 reçoit, du dispositif d'accès 2, la donnée personnelle d'authentification chiffrée cPIN et un chiffré *et* (généré par KEM), à l'étape 510.

A l'étape 515, elle obtient le secret ss par désencapsulation KEM du chiffré *et* à l'aide de sa clé privée sk stockée en mémoire de l'objet portatif : ss=decaps(sk, ct).

Puis à l'étape 520, elle génère la clé de chiffrement *ss'* (pour déchiffrer cPIN) par application de la fonction à sens unique au secret ss obtenu à l'aide du KEM : *ss'*=OWF(*ss*).

La carte à puce 1 peut alors déchiffrer (étape 525), à l'aide de cette clé ss', la donnée personnelle d'authentification chiffrée, ici cPIN, pour récupérer le code PIN saisi par l'utilisateur : PIN = dec(ss', cPIN).

A l'étape 530, la carte à puce 1 vérifie la donnée personnelle d'authentification déchiffrée, soit PIN, avec la donnée personnelle d'authentification de référence 10b (PIN$_{ref}$). Il peut s'agir simplement de vérifier que PIN et PIN$_{ref}$ sont égaux.

En cas de vérification erronée, un message d'erreur est retourné au dispositif d'accès 2, mettant fin à l'authentification et refusant celle-ci.

En cas de donnée personnelle d'authentification valide (vérification 530 positive), la carte à puce 1 génère, à l'étape 535, une confirmation du secret ss, typiquement *Know(ss)*.

Les étapes 510-535 correspondent à l'étape 435 de la Figure 4.

Cette confirmation de secret est envoyée au dispositif d'accès 2 lors de l'étape 540 et retransmise au serveur 3 à l'étape 640. A l'étape 645, le serveur 3 vérifie la confirmation de secret pour valider l'authentification (ou pas).

Par exemple, le serveur génère une confirmation de référence à partir du secret ss généré à l'étape 610 : Know(ss)$_{ref}$, et la compare à la confirmation reçue à l'étape 640. L'authentification est validée en cas d'égalité, refusée en cas de différence.

Dans le schéma proposé, la suppression d'une exécution de la fonction de désencapsulation au profit d'une exécution de la fonction à sens unique est bénéfique car cette dernière est moins coûteuse en ressources et constitue en outre une fonction cryptographique basique généralement déjà présente dans tout module cryptographique constituant un objet portatif 1 d'authentification.

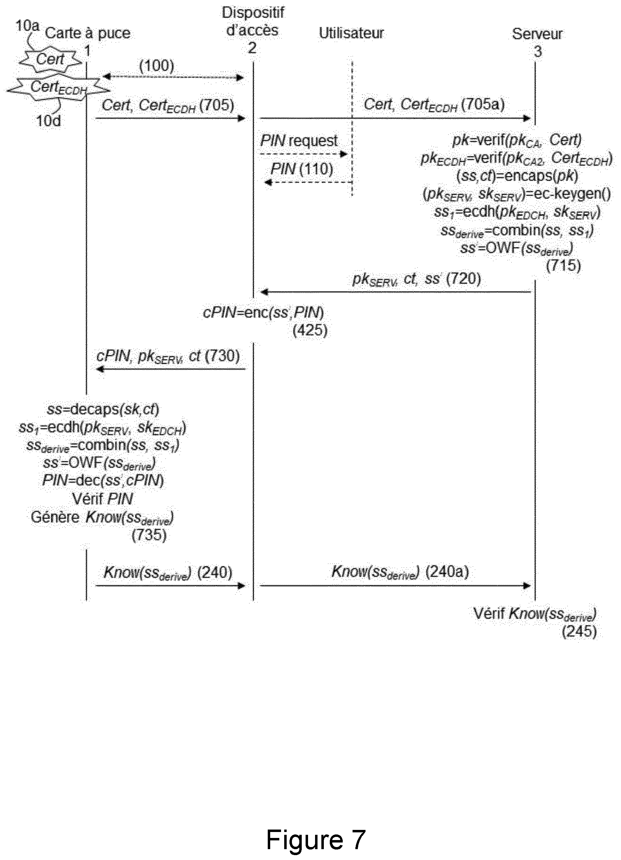

La Figure 7 illustre un schéma d'authentification forte à deux facteurs selon un autre mode de réalisation de l'invention. Dans ce mode de réalisation, le secret dérivé combine le secret obtenu à l'aide du KEM avec au moins un second secret partagé entre l'objet portatif et le dispositif distant et obtenu à l'aide d'un algorithme de cryptographie pré-quantique.

Ce mode de réalisation est dit « hybride » en ce qu'il combine, pour le facteur d'authentification basé sur la confirmation de secret, la sécurité d'un schéma post-quantique (via le KEM) et la sécurité d'un schéma classique pré-quantique (ici illustré par l'EDCH (pour « *Elliptic Curve Diffie-Hellman* » ou « échange de clés Diffie-Hellman basé sur les courbes elliptiques », mécanisme permettant d'établir un secret partagé, à l'aide des paires de clés asymétriques des deux entités intervenant). Ce schéma hybride permet de garantir a *minima* la sécurité d'un schéma classique pour le cas où les mécanismes post-quantiques s'avéraient être plus facilement attaquables que ce que la littérature actuelle avance.

Cette sécurité hybride requiert donc la mise en place d'une autre paire de clés asymétriques ($pk_{EDCH}$, $sk_{EDCH}$) du côté du dispositif portatif 1 (représentée par le certification $Cert_{EDCH}$ 10d sur la Figure). Le serveur 3 aussi dispose d'une paire de clés asymétriques pour réaliser la sécurisation selon un schéma classique, par exemple EDCH. Cette paire ($pk_{SERV}$, $sk_{SERV}$) peut être prédéfinie ou générée à la demande comme décrit pas la suite.

Le schéma EDCH est utilisé par la suite comme exemple de schéma classique permettant d'établir un secret partagé. Des mécanismes similaires peuvent être utilisés dans le cadre de ce mode de réalisation.

Le certificat $Cert_{EDCH}$ 10d est donc transmis, en même temps que Cert 10a, au serveur 3 via le dispositif d'accès 2 (étape 705, 705a). Le certificat Cert 10a, utilisé dans un schéma post-quantique, est de préférence signé avec un algorithme de signature post-quantique, alors que le certificat $Cert_{EDCH}$ 10d, utilisé dans un schéma classique pré-quantique, est de préférence signé avec un algorithme de signature classique pré-quantique.

Dans une variante de réalisation, un seul certificat peut être utilisé qui contient les deux clés publiques $pk$ et $pk_{EDCH}$ accompagnées des deux signatures respectives.

A l'étape 715, le serveur 3 obtient les deux clés publiques $pk$ et $pk_{EDCH}$ de l'utilisateur (via les certificats par exemple) et génère sa propre paire de clés asymétriques ($pk_{SERV}$, $sk_{SERV}$) si nécessaire en utilisant tout mécanisme classique : ($pk_{SERV}$, $sk_{SERV}$)=ec-keygen().

De façon similaire à l'étape 415, le serveur 3 génère le secret d'authentification ss et son chiffré *et* ((ss, ct)=encaps(pk))

En outre, il génère un second secret d'authentification, $ss_1$, basé sur un schéma de cryptographie classique, EDCH dans l'exemple : $ss_1$=ecdh($pk_{EDCH}$, $sk_{SERV}$).

Le serveur 3 peut alors générer la clé de chiffrement *ss'* (utilisée pour la protection du code PIN) à partir des secrets ss et $ss_1$ et à l'aide d'une fonction à sens unique OWF (« *One VVay Function* »).

En pratique, le serveur peut tout d'abord réaliser une combinaison des deux secrets ss et $ss_1$ en un secret combiné $ss_{derive}$ : $ss_{derive}$ = combin(ss, $ss_1$). Différentes fonctions de combinaison peuvent être utilisées, par exemple une simple concaténation, une opération binaire logique, une opération arithmétique, etc (de préférence une simple concaténation).

Puis, le serveur calcule la clé de chiffrement à partir du secret combiné : $ss'$=OWF($ss_{derive}$).

La clé de chiffrement *ss'* est alors transmise au dispositif d'accès 2, avec le chiffré *et* et la clé publique du serveur $pk_{SERV}$, tous deux nécessaires pour l'authentification serveur basée sur le schéma hybride (étape 720).

Après chiffrement du code PIN par le dispositif d'accès (425), les chiffrés *cPIN* et *et* sont transmis à l'objet portatif 1 avec la clé publique du serveur $pk_{SERV}$ (730).

L'objet portatif 1 peut alors (735) :

- récupérer le secret ss à partir du chiffré *et :* ss=decaps(sk, *ct*),
- récupérer le second secret $ss_1$ à partir de la clé publique $pk_{SERV}$ : $ss_1$=ecdh($pk_{SERV}$, $sk_{EDCH}$),
- obtenir le secret combiné : $ss_{derive}$ : $ss_{derive}$ = combin(ss, $ss_1$),
- puis obtenir la clé de chiffrement ss' : $ss'$=OWF($ss_{derive}$).

L'objet portatif 1 dispose alors des deux secrets nécessaires aux deux facteurs d'authentification.

Toujours à l'étape 735, il déchiffre *cPIN* à l'aide de cette clé *ss'* pour obtenir le code PIN saisi : PIN = dec(*ss'*, *cPIN)*. Une comparaison classique entre le code PIN ainsi récupéré et le code PIN de référence 10b est réalisée pour valider ou non le premier facteur d'authentification. Si cette première authentification est validée, les opérations se poursuivent avec la génération de la confirmation de secret.

Dans ce schéma hybride, la confirmation de secret est non seulement basée sur le secret du schéma post-quantique ss mais également basée sur le secret du schéma classique $ss_1$. Toute combinaison (connue du dispositif portatif 1 et du serveur 3) de ces deux secrets peut être utilisée. En particulier, le secret combiné $ss_{derive}$ déjà calculé peut être utilisé : Know($ss_{derive}$).

La confirmation de secret Know($ss_{derive}$) est transmise au serveur 3 (240, 240a) et vérifiée par celui-ci (245).

Dans ce mode de réalisation hybride, les procédés des Figures 5 et 6 sont également réalisés, augmentés des étapes supplémentaires décrites ci-dessus.

Bien que la présente invention ait été décrite ci-dessus en référence à des modes de réalisation spécifiques, la présente invention n'est pas limitée à ces modes de réalisation spécifiques, et des modifications, qui se trouvent dans la portée de la présente invention, seront visibles pour un homme du métier.

En particulier, le schéma d'authentification proposé ici met de préférence en oeuvre un mécanisme d'encapsulation de clé (KEM) post-quantique, par exemple l'un des candidats finalistes au concours Post-Quantum Cryptography Standardization organisé par le NIST. La présente invention s'applique également à la cryptographique classique (non quantique ou post-quantique) dans la mesure où il existe également des KEMs en cryptographie traditionnelle.

De nombreuses autres modifications et variations s'imposeront à ceux qui sont versés dans l'art en se référant aux modes de réalisation illustratifs ci-dessus, qui ne sont donnés qu'à titre d'exemple et qui ne viennent pas limiter la portée de l'invention, celle-ci étant déterminée uniquement par les revendications annexées. En particulier, les différentes caractéristiques des différents modes de réalisation peuvent être échangés, le cas échéant.

Dans les revendications, le mot "comprenant" n'exclut pas d'autres éléments ou étapes, et l'article indéfini "un" ou "une" n'exclut pas une pluralité. Le simple fait que des caractéristiques différentes sont citées dans des revendications dépendantes mutuellement différentes n'indique pas qu'une combinaison de ces caractéristiques ne peut pas être utilisée avantageusement.

**Revendications**

1. Procédé d'authentification d'un utilisateur auprès d'un dispositif distant (3), comprenant, au niveau d'un objet portatif (1) stockant une donnée personnelle d'authentification de référence (10b), les étapes suivantes :

   - recevoir (510), d'un dispositif d'accès (2), une donnée personnelle d'authentification chiffrée (cPIN) et un chiffré (ct) généré par le dispositif distant (3),
   - déchiffrer (525), à l'aide d'une clé cryptographique (ss'), la donnée personnelle d'authentification chiffrée (cPIN), et
   - en cas de donnée personnelle d'authentification valide, envoyer (540), au dispositif distant (3), une confirmation (Know(ss)) d'un secret (ss) obtenu à l'aide d'un mécanisme d'encapsulation de clé, KEM, appliqué audit chiffré (ct),

   **caractérisé en ce que** la clé cryptographique (ss') est générée (520) par application d'une fonction à sens unique (OWF) à un secret dérivé du secret (ss) obtenu à l'aide du KEM.

2. Procédé selon la revendication 1, comprenant en outre l'étape suivante : obtenir (515) le secret (ss) par désencapsulation KEM du chiffré (ct) à l'aide d'une clé privée (sk) d'un schéma clé privée-clé publique stockée en mémoire (10) de l'objet portatif (1).

3. Procédé selon la revendication 1 ou 2, comprenant en outre l'étape suivante : vérifier (530) la donnée personnelle d'authentification déchiffrée (PIN) avec la donnée personnelle d'authentification de référence (10b).

4. Procédé selon l'une des revendications précédentes, comprenant en outre l'étape suivante : générer (535) la confirmation de secret (Know(ss)) par l'application d'une fonction de hachage au secret obtenu ou à toute autre clé dérivée du secret obtenu, ou par le chiffrement d'une donnée prédéterminée à l'aide du secret obtenu ou de toute autre clé dérivée du secret obtenu.

5. Procédé d'authentification d'un utilisateur auprès d'un dispositif distant (3), à l'aide d'un objet portatif (1) stockant une donnée personnelle d'authentification de référence (10b), comprenant les étapes suivantes :

   - générer (610), par le dispositif distant (3), un secret (ss) et un chiffré correspondant (ct) à l'aide d'un mécanisme d'encapsulation de clé, KEM, et d'une clé publique (pk) de l'utilisateur,
   - obtenir (625), par un dispositif d'accès (2) connecté à l'objet portatif (1), une donnée personnelle d'authentification (PIN) saisie par l'utilisateur,
   - chiffrer (630), par le dispositif d'accès (2) et à l'aide d'une clé cryptographique (ss'), la donnée personnelle d'authentification saisie,
   - transmettre (635), à l'objet portatif (1), la donnée d'authentification chiffrée (cPIN) et le chiffré (ct) correspondant au secret (ss), et
   - recevoir (640) en retour, de l'objet portatif (1), une confirmation (Know(ss)) du secret (ss),

   **caractérisé en ce que** la clé cryptographique (ss') est générée (615) par application d'une fonction à sens unique (OWF) à un secret dérivé du secret (ss) obtenu à l'aide du KEM.

6. Procédé selon la revendication 5, dans lequel que la clé cryptographique (ss') est générée (610) par le dispositif distant (3) et transmise par lui au dispositif d'accès (2).

7. Procédé selon la revendication 5 ou 6, comprenant la vérification (645), par le dispositif distant (3), de la confirmation de secret (Know(ss)) reçue en retour, avec le secret (ss) généré, de sorte à authentifier positivement l'objet portatif (1) en cas de vérification positive.

8. Procédé selon l'une des revendications 1 à 7, dans lequel le secret dérivé vaut le secret (ss) obtenu à l'aide du KEM.

9. Procédé selon l'une des revendications 1 à 7, dans lequel le secret dérivé ($ss_{derive}$) combine le secret (ss) obtenu à l'aide du KEM avec au moins un second secret ($ss_1$) partagé entre l'objet portatif (1) et le dispositif distant (3) et obtenu à l'aide d'un algorithme de cryptographie pré-quantique.

10. Procédé selon la revendication 9, dans lequel le second secret partagé ($ss_1$) est obtenu en utilisant un échange de clés Diffie-Hellman basé sur les courbes elliptiques.

11. Procédé selon la revendication 9 ou 10 dans lequel la confirmation de secret est basée sur le secret (ss) obtenu à l'aide du KEM et sur le second secret partagé ($ss_1$).

12. Procédé selon la revendication précédente, dans lequel la confirmation de secret est basée sur le secret dérivé ($ss_{derive}$).

13. Dispositif personnel (1) d'authentification d'un utilisateur auprès d'un dispositif distant (3), comportant une mémoire (10) stockant une donnée personnelle d'authentification de référence (10b) et un processeur (11) configuré pour :

   - recevoir, d'un dispositif d'accès (2), une donnée personnelle d'authentification chiffrée (cPIN) et un chiffré (ct) généré par le dispositif distant (3),
   - déchiffrer, à l'aide d'une clé cryptographique (ss'), la donnée personnelle d'authentification chiffrée (cPIN),
   - en cas de donnée personnelle d'authentification valide, envoyer, au dispositif distant (3), une confirmation (Know(ss)) d'un secret (ss) obtenu à l'aide d'un mécanisme d'encapsulation de clé, KEM, appliqué audit chiffré (ct),

   **caractérisé en ce qu'**il est en outre configuré pour générer la clé cryptographique (ss') par application d'une fonction à sens unique (OWF) à un secret dérivé du secret (ss) obtenu à l'aide du KEM.

14. Système d'authentification (2, 3) d'un utilisateur à l'aide d'un objet portatif (1) stockant une donnée personnelle d'authentification de référence (10b), comprenant un dispositif d'accès (2) et un dispositif distant (3),

le dispositif distant (3) comportant un processeur (31) configuré pour :

- générer un secret (ss) et un chiffré correspondant (ct) à l'aide d'un mécanisme d'encapsulation de clé, KEM, et d'une clé publique (pk) de l'utilisateur,
- authentifier l'objet portatif (1) par vérification d'une confirmation (Know(ss)) du secret (ss) émise par l'objet portatif, et

le dispositif d'accès (2) étant connecté à l'objet portatif (1) et comportant un processeur (21) configuré pour :

- obtenir une donnée personnelle d'authentification (PIN) saisie par l'utilisateur,
- chiffrer, à l'aide d'une clé cryptographique (ss'), la donnée personnelle d'authentification saisie (PIN),
- transmettre, à l'objet portatif (1), la donnée d'authentification chiffrée (cPIN) et le chiffré (ct) correspondant au secret (ss),
- recevoir en retour, de l'objet portatif, la confirmation (Know(ss)) du secret (ss),

le système d'authentification étant **caractérisé en ce qu'**il est configuré pour générer la clé cryptographique (ss') par application d'une fonction à sens unique (OWF) à un secret dérivé du secret (ss) obtenu à l'aide du KEM.

15. Support non transitoire lisible par ordinateur stockant un programme qui, lorsqu'il est exécuté par un processeur d'un dispositif de traitement cryptographique, amène le dispositif de traitement cryptographique à effectuer le procédé selon l'une des revendications 1 à 12.

Figure 1

**Figure 2**

Figure 3

Figure 4

500 — Connecter carte 1 à dispositif d'accès 2

505 — Envoyer *Cert* 10a (*pk*)

510 — Recevoir (*cPIN, ct*)

515 — *ss*=decaps(*sk, ct*)

520 — *ss'*=OWF(*ss*)

525 — *PIN*=dec(*ss', cPIN*)

530 — Vérifier PIN

535 — Générer Know(*ss*)

540 — Transmettre *Know(ss)*

Figure 5

600 — Recevoir *Cert*

605 — Obtenir *pk*

610 — $(ss, ct) = \text{encaps}(pk)$

615 — $ss' = \text{OWF}(ss)$

620 — Communiquer *ss'* et *ct* entre serveur 3 et dispo.2

625 — Obtenir PIN saisi

630 — $cPIN = \text{enc}(ss, PIN)$

635 — Transmettre $(cPIN, ct)$

640 — Recevoir *Know(ss)* (via dispositif d'accès 2)

645 — Vérifier *Know(ss)*

Figure 6

Carte à puce
1

Dispositif
d'accès
2

Utilisateur

Serveur
3

10a

*Cert*

*Cert$_{ECDH}$*

10d

(100)

*Cert, Cert$_{ECDH}$* (705)

*Cert, Cert$_{ECDH}$* (705a)

*PIN* request

*PIN* (110)

$pk$=verif($pk_{CA}$, *Cert*)
$pk_{ECDH}$=verif($pk_{CA2}$, *Cert$_{ECDH}$*)
($ss,ct$)=encaps($pk$)
($pk_{SERV}$, $sk_{SERV}$)=ec-keygen()
$ss_1$=ecdh($pk_{EDCH}$, $sk_{SERV}$)
$ss_{derive}$=combin($ss$, $ss_1$)
$ss$'=OWF($ss_{derive}$)
(715)

$pk_{SERV}$, $ct$, $ss$' (720)

*cPIN*=enc($ss$',*PIN*)
(425)

*cPIN*, $pk_{SERV}$, $ct$ (730)

$ss$=decaps($sk,ct$)
$ss_1$=ecdh($pk_{SERV}$, $sk_{EDCH}$)
$ss_{derive}$=combin($ss$, $ss_1$)
$ss$'=OWF($ss_{derive}$)
*PIN*=dec($ss$',*cPIN*)
Vérif *PIN*
Génère *Know*($ss_{derive}$)
(735)

*Know*($ss_{derive}$) (240)

*Know*($ss_{derive}$) (240a)

Vérif *Know*($ss_{derive}$)
(245)

# Figure 7

Europäisches
Patentamt

European
Patent Office

Office européen
des brevets

**RAPPORT DE RECHERCHE EUROPEENNE**

Numéro de la demande

**EP 23 15 4307**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/233947 A1 (HILTGEN ALAIN [CH]) 23 juillet 2020 (2020-07-23) * abrégé * * alinéa [0001] – alinéa [0007] * * alinéa [0021] – alinéa [0037] * | 1-15 | INV. G06F21/34 G06F21/35 H04L9/32 |
| A | US 2008/065887 A1 (GROVE BRIAN [US] ET AL) 13 mars 2008 (2008-03-13) * abrégé * * alinéa [0003] – alinéa [0017] * * alinéa [0024] – alinéa [0040] * | 1-15 | |
| A | AHMAD BOORGHANY ET AL: "On Constrained Implementation of Lattice-Based Cryptographic Primitives and Schemes on Smart Cards", ACM TRANSACTIONS ON EMBEDDED COMPUTING SYSTEMS, ACM, NEW YORK, NY, US, vol. 14, no. 3, 21 avril 2015 (2015-04-21) , pages 1-25, XP058067913, ISSN: 1539-9087, DOI: 10.1145/2700078 * Sections 1 et 4 * | 1-15 | DOMAINES TECHNIQUES RECHERCHES (IPC) G06F H04L |

Le présent rapport a été établi pour toutes les revendications

| Lieu de la recherche | Date d'achèvement de la recherche | Examinateur |
|---|---|---|
| Munich | 21 avril 2023 | Jakob, Gregor |

## ANNEXE AU RAPPORT DE RECHERCHE EUROPEENNE
## RELATIF A LA DEMANDE DE BREVET EUROPEEN NO.

EP 23 15 4307

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-04-2023

| Document brevet cité au rapport de recherche | Date de publication | Membre(s) de la famille de brevet(s) | Date de publication |
|---|---|---|---|
| US 2020233947 A1 | 23-07-2020 | EP 3480718 A1 | 08-05-2019 |
| | | US 2019138707 A1 | 09-05-2019 |
| | | US 2020233947 A1 | 23-07-2020 |
| US 2008065887 A1 | 13-03-2008 | US 2004098585 A1 | 20-05-2004 |
| | | US 2008065887 A1 | 13-03-2008 |
| | | US 2010100746 A1 | 22-04-2010 |

EPO FORM P0460

Pour tout renseignement concernant cette annexe : voir Journal Officiel de l'Office européen des brevets, No.12/82